(19) Europäisches Patentamt
European Patent Office
Office européen des brevets

(11) EP 4 753 299 A1

(12) EUROPEAN PATENT APPLICATION

(43) Date of publication:
**03.06.2026 Bulletin 2026/23**

(21) Application number: **25178234.8**

(22) Date of filing: **22.05.2025**

(51) International Patent Classification (IPC):
***H04W 4/38*** *(2018.01)* ***G06Q 50/22*** *(2024.01)*

(52) Cooperative Patent Classification (CPC):
**H04W 4/38; G06Q 50/22; H04R 25/55;**
H04R 2225/39; H04R 2225/41

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(71) Applicant: **Oticon A/S**
**2765 Smørum (DK)**

(72) Inventors:
- **LIU, Yang**
  **2765 Smørum (DK)**
- **SIY, Marielle**
  **2765 Smørum (DK)**
- **SALVATUCCI, Antonello**
  **7190 Billund (DK)**
- **SIMON, Barbara**
  **3018 Berne (CH)**
- **PETERSEN, Svend Oscar**
  **2765 Smørum (DK)**
- **CHRISTENSEN, Jeppe Høy**
  **2765 Smørum (DK)**
- **ISAJEW, Piotr**
  **2765 Smørum (DK)**

(74) Representative: **Demant**
**Demant A/S**
**Kongebakken 9**
**2765 Smørum (DK)**

# (54) A METHOD FOR MONITORING SOCIAL ISOLATION OF A USER

(57) ABSTRACT

A method for monitoring social isolation of a user, the method comprising the following steps:
- obtaining, via a hearing aid device, at least one data element about the user or the user environment,
- obtaining a social engagement score based on the at least one data element, the social engagement score indicating how much the user is socially engaged,
- emitting an alert signal when the social engagement score indicates that the user is socially isolated.

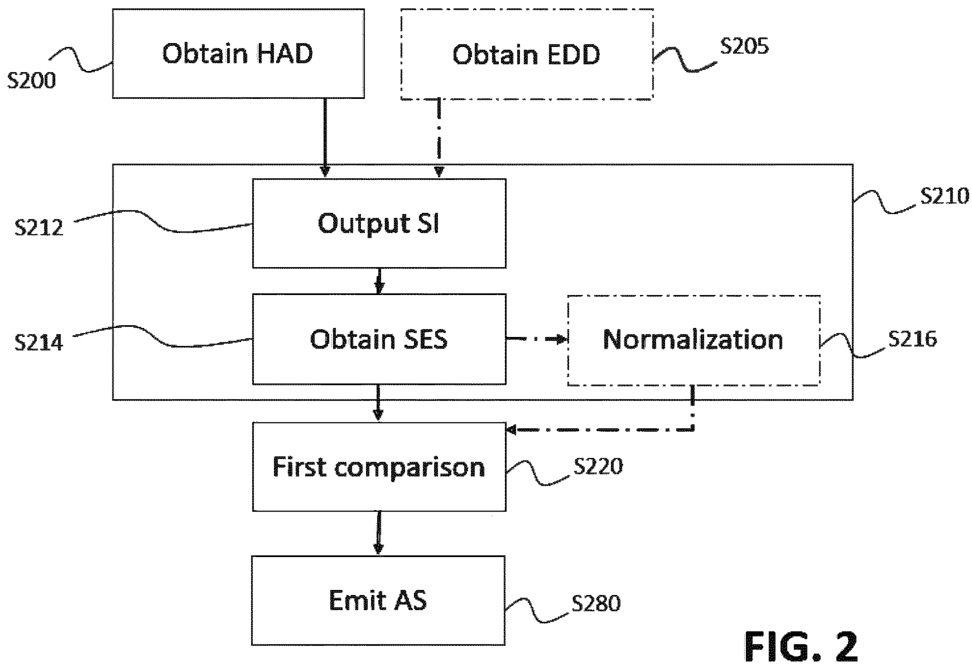


FIG. 2



Processed by Luminess, 75001 PARIS (FR)

## Description

### TECHNICAL FIELD

The present application relates to detection and monitoring of social isolation, and more particularly to detection and monitoring of social isolation based on data obtained via a hearing aid device.

### BACKGROUND ART

Social isolation is an issue that is becoming more and more visible and prevalent in today’s society, especially among older adults.

As described in the scientific paper "Measuring social isolation among older adults using multiple indicators from the NSHAP study", written by Cornell, E.Y., & Waite, L.J. and published in 2009 (Journal of Gerontology: Social Sciences, 64B(S1), 138-146, doi:10.1093/geronb/gbp037. 3970), one aspect of social isolation is a social disconnectedness, i.e. a lack of contact with others and/or a physical separation from others. Such a social disconnectedness may be due to a small social network, infrequent social interactions, and/or a lack of participation in social activities and groups, which can especially be experienced by older adults who experience bereavement, loss of mobility, unemployment, and age-related changes in health such as limitations to hearing and vision, cognitive impairments and increasing disabilities.

Another aspect of social isolation is a perceived isolation, which involves feelings of loneliness and perceived lack of social support from relatives and/or friends.

Among the consequences of social isolation, there is a greater risk of mortality and morbidity, cognitive decline, depression and dementia for the elderly population. Social isolation also lead to extra costs shouldered by healthcare infrastructures, due to earlier admission to residential care and frequent physician visits (see the scientific paper published in 2011 "Preventing loneliness and social isolation: interventions and outcomes", written by Karen Windle, Jennifer Francis and Caroline Coomber). Reducing social isolation is therefore a matter of a primary importance.

Hearing loss can be linked to social isolation, as it causes communication impairment that contributes to social withdrawal. Addressing this hearing loss by wearing a hearing aid device reduces perceived isolation. However, it does not automatically solve the problem of social disconnectedness, as the user may still avoid social interaction for fear of being stigmatized and excluded in the conversation.

Nowadays, to decrease social isolation, one-to-one interventions, group services or meetings may be offered. However, it has been observed that these events are often not reaching the people who need them the most, these people often having health and/or mobility issues. Moreover, these meetings may be not fit to the concerned person, and it may be difficult to maintain these meetings over the long term.

Moreover, assessments done to identify social isolation are usually completed via one-to-one interviews or questionnaires. However, the responses obtained during these assessments have a large variability and reliability, and depend on how the questions are perceived and the current attitude and mood of the interviewee. In addition, the assessment is carried out only once to establish a baseline, reflecting a static, one-dimensional representation of a complex phenomenon.

There is therefore a need for a solution to detect and monitor social isolation in a more efficient manner.

### SUMMARY

#### A method:

According to an aspect of the present disclosure, a method for monitoring social isolation of a user is provided.

The method may comprise a step of obtaining via a hearing aid device, at least one data element about the user or the user environment.

The method may also comprise a step of obtaining a social engagement score based on the at least one data element about the user or the user environment, the social engagement score indicating how much the user is socially engaged.

The method can comprise a step of emitting an alert signal when the social engagement score indicates that the user is socially isolated.

This method provides an efficient and effective way to identify social isolation and to combat it, by using a hearing device which is a device that the user is already using most of the time and that can obtain many useful indicators for social activity participation. The social engagement score allows identifying high-risk individuals, even at an early stage of social isolation. Moreover, the alert signal helps increasing the social engagement of the user, by making him aware of the issue, and providing him proper social support and early intervention as soon as the social isolation is detected.

Data about the user describes the user activity and/or state, and can for example be a sound coming from the user

such as e.g. the voice of the user, movement data, and/or health data such as temperature data, cognitive load data, heart rate, heart rate variability, blood pressure, etc.

Data about the environment of the user describes the environment of the user, typically the physical environment, e.g. a sound of the environment of the user. The environment of the user can be e.g. a home environment, a nature environment, a public space environment, etc.

These data can therefore be considered as being status signals related to a current physical environment of the hearing aid (e.g. the current acoustic environment), and/or to a current state of the user wearing the hearing aid, and/or to a current state or mode of operation of the hearing aid.

The at least one data element about the user or the user environment may comprise a sound signal obtained by a microphone of the hearing aid device, and/or a signal obtained by an accelerometer of the hearing aid device, a signal from a health sensor of the hearing aid device, a signal from a user interface of the hearing aid device, etc.

When the at least one data element about the user or the user environment comprise an obtained sound signal, this obtained sound signal can comprise the sound around the user (which is more specifically data about the environment of the user), and/or the voice of the user (which is more specifically data about the user).

The step of obtaining the social engagement score may comprise the following steps:

- inputting the at least one data element to a neural network module, so that the neural network outputs at least one social indicator,
- obtaining the social engagement score based on the at least one social indicator.

The neural network module comprises at least one trained neural network. By trained neural network, it is meant a neural network that has undergone a training phase, during which training data have been inputted to the neural network to learn to output at least one social indicator, and is now in a using phase, and is therefore able to provide at least a social indicator based on the input data.

The method may further comprise a step of obtaining, via an external device, at least one another data element about the user or the user environment.

**In** such a case, the at least one another data element obtained by the external device and the at least one data element obtained by the hearing aid device can be inputted into the trained neural network so that the neural network outputs the at least one social indicator.

The external device is typically a smartphone, but can also be a computer, a tablet, or other portable or wearable electronic device, such as a smartwatch or the like.

The at least one data element about the user or the user environment may comprise a sound signal obtained by a microphone of the external device, and/or a signal obtained by an accelerometer of the external device, a signal from a health sensor of the external device, a signal from a user interface of the external device, etc.

The at least one social indicator can comprise:

- a user interaction activity indicator, describing the type of interaction activity of the user,
- a user sound environment indicator, describing the type of sound environment around the user,
- a user travelling activity indicator describing the type of travelling activity of the user, and/or
- a user conversation partner indicator describing the presence of at least one conversation partner of the user.

The interaction activity type can e.g. be:

- a listening activity,
- a speaking activity,
- a speaking and listening activity, or
- a silent activity wherein the user does not speak nor listen to a sound.

The user sound environment type can be e.g. an outdoor sound environment, an indoor sound environment (home like sound environment), loud sound environment, quiet sound environment, etc.

The travelling activity type can be e.g. a non-travelling activity (e.g., sitting or standing still), a walking activity or a running activity, an activity implying that the user use means of transport, etc.

The user conversation partner indicator can indicate the type of conversation partner, for example if he is family, a friend, or a caregiver. The user conversation partner indicator can comprise the identity of each or at least one conversation partner.

The social engagement score can be obtained according to the following formula:

$$SES = \sum_{i=1}^{n} m_i \, q_i$$

wherein:

- SES is the social engagement score,
- n is a number of social indicators within a time period,
- $m_i$ is a duration associated with the i-th social indicator, and
- $q_i$ is a social score associated with the i-th social indicator.

The time period is typically a day.

The social engagement score can be obtained by using a matrix which links each social indicator to an associated social score which defines a level of social engagement.

The social engagement score can be normalized according to the following formula:

$$SES_{norm} = \frac{SES * UTS}{UT}$$

wherein:

- $SES_{norm}$ is the normalized social engagement score,
- SES is the social engagement score,
- UT is a hearing aid device usage time, and
- UTS is a usage time score, obtained according to the following formula:

$$UTS = \begin{cases} 1 - \dfrac{|UT - RUT|}{RUT} & , if\ UT < RUT \\ 1, & if\ UT \geq RUT \end{cases}$$

wherein:

- RUT is a recommended hearing aid device usage time, and
- UT is an actual usage time.

The method can further comprise the step of comparing the social engagement score or the normalized social engagement score to a social engagement score threshold, the alert signal being sent when the comparison defines a degradation of the social engagement.

The alert can be a message sent to a close relation of the user and/or a caregiver.

A system:

According to an aspect of the present disclosure, a system for monitoring social isolation of a user is provided.

The system for monitoring social isolation of a user can comprise a hearing aid device configured to obtain at least one data element about the user or the user environment.

The system can be configured to:

- obtain a social engagement score based on the at least one data element, the social engagement score indicating how much the user is socially engaged,
- emit an alert when the social engagement score indicates that the user is socially isolated.

The system can comprise an external device such as a computer, a tablet, a smartphone, or other portable or wearable electronic device, such as a smartwatch or the like, the external device being configured to obtain the social engagement score and/or emit the alert.

The system can comprise a server configured to obtain the social engagement score and/or emit the alert.

A hearing aid:

According to an aspect of the present disclosure, the system for monitoring comprises a hearing aid device, also called hearing aid.

The hearing aid may be adapted to provide a frequency dependent gain and/or a level dependent compression and/or a transposition (with or without frequency compression) of one or more frequency ranges to one or more other frequency ranges, e.g. to compensate for a hearing impairment of a user. The hearing aid may comprise a signal processor for enhancing the input signals and providing a processed output signal.

The hearing aid may comprise an output unit for providing a stimulus perceived by the user as an acoustic signal based on a processed electric signal. The output unit may comprise a number of electrodes of a cochlear implant (for a CI type hearing aid) or a vibrator of a bone conducting hearing aid. The output unit may comprise an output transducer. The output transducer may comprise a receiver (loudspeaker) for providing the stimulus as an acoustic signal to the user (e.g. in an acoustic (air conduction based) hearing aid). The output transducer may comprise a vibrator for providing the stimulus as mechanical vibration of a skull bone to the user (e.g. in a bone-attached or bone-anchored hearing aid).

The hearing aid may comprise an input unit for providing an electric input signal representing sound. The input unit may comprise an input transducer, e.g. a microphone, for converting an input sound to an electric input signal. The input unit may comprise a wireless receiver for receiving a wireless signal comprising or representing sound and for providing an electric input signal representing said sound. The wireless receiver may e.g. be configured to receive an electromagnetic signal in the radio frequency range (3 kHz to 300 GHz). The wireless receiver may e.g. be configured to receive an electromagnetic signal in a frequency range of light (e.g. infrared light 300 GHz to 430 THz, or visible light, e.g. 430 THz to 770 THz).

The hearing aid may comprise a directional microphone system adapted to spatially filter sounds from the environment, and thereby enhance a target acoustic source among a multitude of acoustic sources in the local environment of the user wearing the hearing aid. The directional system may be adapted to detect (such as adaptively detect) from which direction a particular part of the microphone signal originates. This can be achieved in various different ways as e.g. described in the prior art. In hearing aids, a microphone array beamformer is often used for spatially attenuating background noise sources. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating sound signals from other directions maximally. The generalized sidelobe canceller (GSC) structure is an equivalent representation of the MVDR beamformer offering computational and numerical advantages over a direct implementation in its original form.

The hearing aid may comprise a communication interface comprising an antenna and transceiver circuitry allowing a wireless link to an external device such as an entertainment device (e.g. a TV-set), a communication device (e.g. a telephone), a wireless microphone, or another hearing aid, etc. The hearing aid may thus be configured to wirelessly receive a direct electric input signal from another device. Likewise, the hearing aid may be configured to wirelessly transmit a direct electric output signal to another device. The direct electric input or output signal may represent or comprise an audio signal and/or a control signal and/or an information signal.

In general, a wireless link established by antenna and transceiver circuitry of the hearing aid can be of any type. The wireless link may be a link based on near-field communication, e.g. an inductive link based on an inductive coupling between antenna coils of transmitter and receiver parts. The wireless link may be based on far-field, electromagnetic radiation. Preferably, frequencies used to establish a communication link between the hearing aid and the other device is below 70 GHz, e.g. located in a range from 50 MHz to 70 GHz, e.g. above 300 MHz, e.g. in an ISM range above 300 MHz, e.g. in the 900 MHz range or in the 2.4 GHz range or in the 5.8 GHz range or in the 60 GHz range (ISM=Industrial, Scientific and Medical, such standardized ranges being e.g. defined by the International Telecommunication Union, ITU). The wireless link may be based on a standardized or proprietary technology. The wireless link may be based on Bluetooth technology (e.g. Bluetooth Low-Energy technology), or Ultra WideBand (UWB) technology.

The hearing aid may be or form part of a portable (i.e. configured to be wearable) device, e.g. a device comprising a local energy source, e.g. a battery, e.g. a rechargeable battery. The hearing aid may e.g. be a low weight, easily wearable, device, e.g. having a total weight less than 100 g, such as less than 20 g.

The hearing aid may comprise a 'forward' (or 'signal') path for processing an audio signal between an input and an output of the hearing aid. The signal processor may be located in the forward path. The signal processor may be adapted to provide a frequency dependent gain according to a user's particular needs (e.g. hearing impairment). The hearing aid may comprise an 'analysis' path comprising functional components for analyzing signals and/or controlling processing of the forward path. Some or all signal processing of the analysis path and/or the forward path may be conducted in the frequency domain, in which case the hearing aid comprises appropriate analysis and synthesis filter banks. Some or all signal processing of the analysis path and/or the forward path may be conducted in the time domain.

An analogue electric signal representing an acoustic signal may be converted to a digital audio signal in an

analogue-to-digital (AD) conversion process, where the analogue signal is sampled with a predefined sampling frequency or rate $f_s$, $f_s$ being e.g. in the range from 8 kHz to 48 kHz (adapted to the particular needs of the application) to provide digital samples $x_n$ (or x[n]) at discrete points in time $t_n$ (or n), each audio sample representing the value of the acoustic signal at $t_n$ by a predefined number $N_b$ of bits, $N_b$ being e.g. in the range from 1 to 48 bits, e.g. 24 bits. Each audio sample is hence quantized using $N_b$ bits (resulting in $2^{Nb}$ different possible values of the audio sample). A digital sample x has a length in time of $1/f_s$, e.g. 50 $\mu$s, for $f_s$ = 20 kHz. A number of audio samples may be arranged in a time frame. A time frame may comprise 64 or 128 audio data samples. Other frame lengths may be used depending on the practical application.

The hearing aid may comprise an analogue-to-digital (AD) converter to digitize an analogue input (e.g. from an input transducer, such as a microphone) with a predefined sampling rate, e.g. 20 kHz. The hearing aids may comprise a digital-to-analogue (DA) converter to convert a digital signal to an analogue output signal, e.g. for being presented to a user via an output transducer.

The hearing aid, e.g. the input unit, and or the antenna and transceiver circuitry may comprise a transform unit for converting a time domain signal to a signal in the transform domain (e.g. frequency domain or Laplace domain, etc.). The transform unit may be constituted by or comprise a TF-conversion unit for providing a time-frequency representation of an input signal. The time-frequency representation may comprise an array or map of corresponding complex or real values of the signal in question in a particular time and frequency range. The TF conversion unit may comprise a filter bank for filtering a (time varying) input signal and providing a number of (time varying) output signals each comprising a distinct frequency range of the input signal. The TF conversion unit may comprise a Fourier transformation unit (e.g. a Discrete Fourier Transform (DFT) algorithm, or a Short Time Fourier Transform (STFT) algorithm, or similar) for converting a time variant input signal to a (time variant) signal in the (time-)frequency domain. The frequency range considered by the hearing aid from a minimum frequency $f_{min}$ to a maximum frequency $f_{max}$ may comprise a part of the typical human audible frequency range from 20 Hz to 20 kHz, e.g. a part of the range from 20 Hz to 12 kHz. Typically, a sample rate $f_s$ is larger than or equal to twice the maximum frequency $f_{max}$, $f_s \geq 2f_{max}$. A signal of the forward and/or analysis path of the hearing aid may be split into a number *NI* of frequency bands (e.g. of uniform width), where *NI* is e.g. larger than 5, such as larger than 10, such as larger than 50, such as larger than 100, such as larger than 500, at least some of which are processed individually. The hearing aid may be adapted to process a signal of the forward and/or analysis path in a number *NP* of different frequency channels ($NP \leq NI$). The frequency channels may be uniform or non-uniform in width (e.g. increasing in width with frequency), overlapping or non-overlapping.

The hearing aid may be configured to operate in different modes, e.g. a normal mode and one or more specific modes, e.g. selectable by a user, or automatically selectable. A mode of operation may be optimized to a specific acoustic situation or environment. A mode of operation may include a low-power mode, where functionality of the hearing aid is reduced (e.g. to save power), e.g. to disable wireless communication, and/or to disable specific features of the hearing aid.

The hearing aid may comprise a number of detectors configured to provide status signals relating to a current physical environment of the hearing aid (e.g. the current acoustic environment), and/or to a current state of the user wearing the hearing aid, and/or to a current state or mode of operation of the hearing aid. Alternatively or additionally, one or more detectors may form part of an *external* device in communication (e.g. wirelessly) with the hearing aid. An external device may e.g. comprise another hearing aid, a remote control, and audio delivery device, a telephone (e.g. a smartphone), an external sensor, etc.

One or more of the number of detectors may operate on the full band signal (time domain). One or more of the number of detectors may operate on band split signals ((time-) frequency domain), e.g. in a limited number of frequency bands.

The number of detectors may comprise a level detector for estimating a current level of a signal of the forward path. The detector may be configured to decide whether the current level of a signal of the forward path is above or below a given (L-)threshold value. The level detector operates on the full band signal (time domain). The level detector operates on band split signals ((time-) frequency domain).

The hearing aid may comprise a voice activity detector (VAD) for estimating whether or not (or with what probability) an input signal comprises a voice signal (at a given point in time). A voice signal may in the present context be taken to include a speech signal from a human being. It may also include other forms of utterances generated by the human speech system (e.g. singing). The voice activity detector unit may be adapted to classify a current acoustic environment of the user as a VOICE or NO-VOICE environment. This has the advantage that time segments of the electric microphone signal comprising human utterances (e.g. speech) in the user's environment can be identified, and thus separated from time segments only (or mainly) comprising other sound sources (e.g. artificially generated noise). The voice activity detector may be adapted to detect as a VOICE also the user's own voice. Alternatively, the voice activity detector may be adapted to exclude a user's own voice from the detection of a VOICE.

The hearing aid may comprise an own voice detector for estimating whether or not (or with what probability) a given input sound (e.g. a voice, e.g. speech) originates from the voice of the user of the system. A microphone system of the hearing aid may be adapted to be able to differentiate between a user's own voice and another person's voice and possibly from NON-voice sounds.

The number of detectors may comprise a movement detector, e.g. an acceleration sensor. The movement detector may be configured to detect movement of the user's facial muscles and/or bones, e.g. due to speech or chewing (e.g. jaw movement) and to provide a detector signal indicative thereof.

The hearing aid may comprise a classification unit configured to classify the current situation based on input signals from (at least some of) the detectors, and possibly other inputs as well.

In the present context 'a current situation' may be taken to be defined by one or more of

a) the physical environment (e.g. including the current electromagnetic environment, e.g. the occurrence of electromagnetic signals (e.g. comprising audio and/or control signals) intended or not intended for reception by the hearing aid, or other properties of the current environment than acoustic);
b) the current acoustic situation (input level, feedback, etc.), and
c) the current mode or state of the user (movement, temperature, cognitive load, etc.);
d) the current mode or state of the hearing aid (program selected, time elapsed since last user interaction, etc.) and/or of another device in communication with the hearing aid.

The classification unit may be based on or comprise a neural network, e.g. a trained neural network.

The hearing aid may comprise an acoustic (and/or mechanical) feedback control (e.g. suppression) or echo-cancelling system. Adaptive feedback cancellation has the ability to track feedback path changes over time. It is typically based on a linear time invariant filter to estimate the feedback path but its filter weights are updated over time. The filter update may be calculated using stochastic gradient algorithms, including some form of the Least Mean Square (LMS) or the Normalized LMS (NLMS) algorithms. They both have the property to minimize the error signal in the mean square sense with the NLMS additionally normalizing the filter update with respect to the squared Euclidean norm of some reference signal.

The hearing aid may further comprise other relevant functionality for the application in question, e.g. compression, noise reduction, etc.

The hearing aid may comprise a hearing instrument, e.g. a hearing instrument adapted for being located at the ear or fully or partially in the ear canal of a user, e.g. a headset, an earphone, an ear protection device or a combination thereof. A hearing system may comprise a speakerphone (comprising a number of input transducers and a number of output transducers, e.g. for use in an audio conference situation), e.g. comprising a beamformer filtering unit, e.g. providing multiple beamforming capabilities.

Use:

In an aspect, use of a hearing aid as described above, in the 'detailed description of embodiments' and in the claims, is moreover provided. Use may be provided in a system comprising one or more hearing aids (e.g. hearing instruments), headsets, ear phones, active ear protection systems, etc., e.g. in handsfree telephone systems, teleconferencing systems (e.g. including a speakerphone), public address systems, karaoke systems, classroom amplification systems, etc.

It is intended that some or all of the structural features of the hearing aid described above, in the 'detailed description of embodiments' or in the claims can be combined with embodiments of the method, when appropriately substituted by a corresponding process and vice versa.

A computer readable medium or data carrier:

In an aspect, a tangible computer-readable medium (a data carrier) storing a computer program comprising program code means (instructions) for causing a data processing system (a computer) to perform (carry out) at least some (such as a majority or all) of the (steps of the) method described above, in the 'detailed description of embodiments' and in the claims, when said computer program is executed on the data processing system is furthermore provided by the present application.

By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Other storage media include storage in DNA (e.g. in synthesized DNA strands). Combinations of the above should also be included within the scope of computer-readable media. In addition to being stored on a tangible medium, the computer program can also be transmitted via a transmission medium such as a wired or wireless link or a network, e.g. the Internet, and loaded into a data processing system for being executed at a location different from that of the tangible

medium.

A computer program:

A computer program (product) comprising instructions which, when the program is executed by a computer, cause the computer to carry out (steps of) the method described above, in the 'detailed description of embodiments' and in the claims is furthermore provided by the present application.

A data processing system:

In an aspect, a data processing system comprising a processor and program code means for causing the processor to perform at least some (such as a majority or all) of the steps of the method described above, in the 'detailed description of embodiments' and in the claims is furthermore provided by the present application.

A hearing system:

In a further aspect, a hearing system comprising a hearing aid as described above, in the 'detailed description of embodiments', and in the claims, AND an auxiliary device such as the external device is moreover provided.

The hearing system may be adapted to establish a communication link between the hearing aid and the auxiliary device to provide that information (e.g. control and status signals, possibly audio signals) can be exchanged or forwarded from one to the other.

The auxiliary device may comprise a remote control, a smartphone, or other portable or wearable electronic device, such as a smartwatch or the like.

The auxiliary device may be constituted by or comprise a remote control for controlling functionality and operation of the hearing aid(s). The function of a remote control may be implemented in a smartphone, the smartphone possibly running an APP allowing to control the functionality of the audio processing device via the smartphone (the hearing aid(s) comprising an appropriate wireless interface to the smartphone, e.g. based on Bluetooth or some other standardized or proprietary scheme).

The auxiliary device may be constituted by or comprise an audio gateway device adapted for receiving a multitude of audio signals (e.g. from an entertainment device, e.g. a TV or a music player, a telephone apparatus, e.g. a mobile telephone or a computer, e.g. a PC) and adapted for selecting and/or combining an appropriate one of the received audio signals (or combination of signals) for transmission to the hearing aid.

The auxiliary device may be constituted by or comprise another hearing aid. The hearing system may comprise two hearing aids adapted to implement a binaural hearing system, e.g. a binaural hearing aid system.

An APP:

In a further aspect, a non-transitory application, termed an APP, is furthermore provided by the present disclosure. The APP comprises executable instructions configured to be executed on an auxiliary device to implement a user interface for a hearing aid or a hearing system described above in the 'detailed description of embodiments', and in the claims. The APP may be configured to run on cellular phone, e.g. a smartphone, or on another portable device allowing communication with said hearing aid or said hearing system.

Definitions:

In the present context, a hearing aid, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears, acoustic signals transferred as mechanical vibrations to the user's inner ears through the bone structure of the user's head and/or through parts of the middle ear as well as electric signals transferred directly or indirectly to the cochlear nerve of the user.

The hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, as an attachable, or entirely or partly implanted, unit, etc. The hearing aid may comprise a single unit or several units communicating (e.g. acoustically, electrically or optically) with each other. The loudspeaker may be arranged in a housing together with other components of the hearing aid, or may be an external unit in

itself (possibly in combination with a flexible guiding element, e.g. a dome-like element).

A hearing aid may be adapted to a particular user's needs, e.g. a hearing impairment. A configurable signal processing circuit of the hearing aid may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing aid via an interface to a programming device (fitting system), and used by a processing algorithm executed by the configurable signal processing circuit of the hearing aid.

A 'hearing system' refers to a system comprising one or two hearing aids, and a 'binaural hearing system' refers to a system comprising two hearing aids and being adapted to cooperatively provide audible signals to both of the user's ears. Hearing systems or binaural hearing systems may further comprise one or more 'auxiliary devices', which communicate with the hearing aid(s) and affect and/or benefit from the function of the hearing aid(s). Such auxiliary devices may include at least one of a remote control, a remote microphone, an audio gateway device, an entertainment device, e.g. a music player, a wireless communication device, e.g. a mobile phone (such as a smartphone) or a tablet or another device, e.g. comprising a graphical interface.. Hearing aids, hearing systems or binaural hearing systems may e.g. be used for compensating for a hearing-impaired person's loss of hearing capability, augmenting or protecting a normal-hearing person's hearing capability and/or conveying electronic audio signals to a person. Hearing aids or hearing systems may e.g. form part of or interact with public-address systems, active ear protection systems, handsfree telephone systems, car audio systems, entertainment (e.g. TV, music playing or karaoke) systems, teleconferencing systems, classroom amplification systems, etc.

## BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:

FIG. 1 shows a system for monitoring social isolation of a user, according to an exemplary embodiment of the invention, and in one example of environment of such a system,

FIG. 2 shows a method for monitoring social isolation of a user, according to an exemplary embodiment of the invention,

FIG. 3 shows examples of interaction activity types that can be used in an implementation of a method for monitoring social isolation of a user, according to an exemplary embodiment of the invention,

FIG. 4 shows examples of travelling activity types that can be used in an implementation of a method for monitoring social isolation of a user, according to an exemplary embodiment of the invention,

FIG. 5 shows examples of user sound environment types that can be used in an implementation of a method for monitoring social isolation of a user, according to an exemplary embodiment of the invention,

FIG. 6 shows an example of a table that can be used in an implementation of a method for monitoring social isolation of a user, according to an exemplary embodiment of the invention, and

FIG. 7 shows a method for determining training data to train a neural network that can be used in an implementation of a method social isolation of a user, according to an exemplary embodiment of the invention.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

FIG. 1 schematically shows a system 100 according to an exemplary embodiment of the invention, in one example of environment of such a system 100.

The system 100 comprises a hearing aid device HA, which is typically worn by a user U.

The hearing aid device HA is configured to obtain data about the user U or data about the user environment UE, via one or several sensors (also called detectors in this document). Each sensor of the hearing aid device HA can typically be a microphone, an accelerometer, a health sensor, a user interface of the hearing aid device, etc.

Each health sensor (or biometrical sensor) can be a temperature sensor, an electroencephalogram (EEG) sensor, an electrooculography (EOG) sensor, an optical heart rate (OHR) sensor such as e.g. a PhotoPlethysmosGram (PPG) sensor, vibration sensors, Galvanic skin response (GSR) sensors, Electrocardiogram (ECG) sensors, Auditory brainstem response (ABR) sensors, electromyograms (EMG) sensors, electromyograms (EMG) sensors, motion sensors (e.g. an accelerometer), electrochemical sensor (e.g. blood glucose monitoring), etc.

The hearing aid device HA may comprise at least one of the elements/functionalities previously described in the "hearing aid" section.

The hearing aid device HA thus comprises an input unit for providing an electric input signal representing sound. The input unit typically comprises microphone(s), for converting an input sound to an electric input signal.

The hearing aid device HA also comprises a signal processor for enhancing the input signal and providing a processed output signal, and an output unit for providing a stimulus perceived by the user as an acoustic signal based on the processed electric signal.

Moreover, the hearing aid device HA comprises a communication interface for communicating with other devices. The communication interface typically comprises an antenna and a transceiver circuit for communicating wirelessly, typically via a first network NW1.

The first network NW1 is typically a short-range network, such as a Bluetooth network.

The system 100 can also comprise an external device ED and/or a server SV.

The external device ED is for example a computer, a tablet, a smartphone, or other portable or wearable electronic device, such as a smartwatch or the like.

The external device ED comprises a controller, a memory and a communication interface. The memory is configured to store executable instructions and data. The memory can constitute a recording medium according to the present disclosure, readable by the controller and on which is stored a computer program including instructions for carrying out at least a part of a method according to an exemplary embodiment of the invention. The memory can comprise a non-volatile rewritable memory (such as an EEPROM).

As described below, at least a part of a neural network module can be stored, at least partially, in the memory of the external device ED. The neural network module comprises at least one trained neural network. By trained neural network, it is meant a neural network that

- has undergone a training session, during which training data have been inputted into the neural network and at least one weight of the neural network has been adjusted to improve the accuracy of the output, based on the result of a cost function, and
- is now in a using session, and is therefore able to provide at least a social indicator (the output) based on new input data.

The external device ED can communicate with the hearing aid device HA via the first network NW1.

The external device ED can also communicate with the server SV via a second network NW2 which is typically a long-range network.

The external device ED may be constituted by or comprise a remote control for controlling functionality and operation of the hearing aid device HA, by communicating with the hearing aid device HA via the first network NW1. The external device ED can run an APP allowing the remote control.

The external device ED may be constituted by or comprise an audio gateway device adapted for receiving a multitude of audio signals (e.g. from an entertainment device, e.g. a TV or a music player, a telephone apparatus, e.g. a mobile telephone or a computer, e.g. a PC) and adapted for selecting and/or combining an appropriate one of the received audio signals (or combination of signals) for transmission to the hearing aid device HA, via the first network NW1.

The external device ED is configured to obtain other data about the user U or the user environment UE, via one or several sensors.

Each sensor of the external device ED can typically be a microphone, an accelerometer, a localization module, such as a GPS (for "Global Positioning System") receiver, a health sensor, a user interface of the external device ED, etc.

The health sensor can be an image sensor (e.g. a camera), an ambient light sensor, or a motion sensor such as a barometer sensor, an accelerometer, a gyroscope or a proximity sensor.

The server SV comprises a controller, a memory and a communication interface. The memory is configured to store executable instructions and data. The memory can constitute a recording medium according to the present disclosure, readable by the controller and on which is stored a computer program including instructions for carrying out a part of a method according to an exemplary embodiment of the invention. The memory can comprise a non-volatile rewritable memory (such as an EEPROM). At least a part of the neural network module can be stored, at least partially, in the memory of the server SV.

FIG. 2 shows a method according to an exemplary embodiment of the invention. The method is typically performed by a system comprising a hearing aid device, e.g. the system 100 of FIG. 1.

In a step S200, at least one data element HAD about the user U or the user environment UE are obtained via the hearing aid device HA.

Data element about the user describes the user activity and/or state, and can for example be a sound coming from the user U such as e.g. the voice of the user, movement data, and/or health data such as temperature data, cognitive load data, heart rate, heart rate variability, blood pressure, etc. Cognitive load can be specifically measured via heart rate variability, blood pressure, and task-invoked pupillary response.

Data element about the environment of the user describes the environment UE of the user U, typically the physical environment, e.g. a sound of the environment UE of the user U. The environment UE can be e.g. a home environment, a nature environment, a public space environment, etc.

Data element HAD typically comprises at least one sound signal obtained by the at least one microphone of the hearing aid device HA. The obtained sound signal can comprise the sound around the user U (which is more specifically data about the environment of the user), and/or the voice of the user (which is more specifically data about the user). Whether the obtained sound signal comprises voice of the user can be e.g. determined using a voice activity detector (VAD) of the hearing aid device HA.

Data element HAD can also comprise at least one signal obtained by the accelerometer of the hearing aid device HA, at least one signal from at least one health sensor of the hearing aid device HA, and/or at least one signal from a user interface of the hearing aid device HA, etc.

These data can therefore be considered as being status signals related to a current physical environment of the hearing aid (e.g. the current acoustic environment), and/or to a current state of the user wearing the hearing aid, and/or to a current state or mode of operation of the hearing aid.

Step S200 is typically performed continuously or periodically. The obtained data are then typically transmitted by the hearing aid device HA to the external device ED via the first network NW1.

The method can also comprise a step S205, wherein at least another data element EDD about the user U or the user environment UE is obtained, via the external device ED.

Data element EDD typically comprises at least one sound signal obtained by the microphone of the external device ED. The obtained sound signal can comprise the sound around the user U (which is more specifically data about the environment of the user).

Data element EDD can also comprise at least one signal obtained by the accelerometer of the external device ED, at least one signal from at least one health sensor of the external device ED, and/or at least one signal from a user interface of the external device ED, at least one signal of the localization module of the external device ED, etc.

The at least one signal from a user interface of the external device ED typically carries information about data inputted by the user U via the user interface, such as data about his feeling or state, e.g. inputted by the user U to respond to a question displayed by the user interface, the question being e.g. a part of a push message, and being typically displayed periodically.

The at least one signal from a user interface of the external device ED can also carry information about how the external device ED is used by the user U (e.g. which app is being used, etc.).

Step S205 is performed continuously or periodically.

In a step S210, a social engagement score SES, indicating how much the user is socially engaged, can be obtained based on data element HAD obtained by the hearing aid device HA and, when step S205 is performed, on data element EDD obtained by the external device ED.

More specifically, the step S210 of obtaining the social engagement score SES can comprises a step of inputting S212 the data element HAD obtained by the hearing aid device HA to the neural network module (and therefore to the at least one trained neural network).

Step S212 is typically performed periodically.

In that case, all the data elements HAD obtained by the hearing aid device HA and received by the external device ED since the previous iteration of step S210 can be inputted to the neural network module.

When step S205 is performed at least once, these at least another data elements EDD obtained by the external device ED are inputted into the neural network module with the at least data elements HAD obtained by the hearing aid device HA.

When step S212 is performed periodically, all the data elements EDD obtained by the external device ED in step S205 since the previous iteration of step S210 are inputted to the neural network module with all the data elements HAD obtained by the hearing aid device HA and received by the external device ED since the previous iteration of step S210.

The neural network module is typically stored in the memory of the external device ED, and step S212 is performed by the external device ED. As an alternative, the neural network module can be stored in the memory of the server SV. The external device ED then transmits the data elements HAD obtained by the hearing aid device HA and the data elements EDD eventually obtained by the external device ED to the server SV via the second network NW2.

The neural network module then outputs at least one social indicator SI, typically a plurality of social indicators SI.

Each social indicator SI can be:

- a user interaction activity indicator, describing the type of interaction activity of the user U,
- a user sound environment indicator, describing the type of sound environment around the user U,
- a user travelling activity indicator, describing the type of travelling activity of the user U, and/or
- a user conversation partner indicator, describing the presence of at least one conversation partner of the user U.

The neural network therefore acts as a classification unit, which, based on data obtained by a sensor of the hearing aid device HA and the external device ED, classifies a current situation of the user, which is described by the outputted social indicators SI.

The interaction activity type can e.g. be:

- a listening activity (also called passive listening activity),
- a speaking activity,
- a speaking and listening activity (also called active listening activity), or
- a silent activity wherein the user does not speak nor listen to a sound (also called isolation activity).

The active listening activity can be for example:

- a call using a media, such as a phone call or a video call,
- a small group conversation, for example a conversation between 2 or 3 people, or
- a large group conversation, for example a conversation between 4 people or more.

The passive listening activity can be for example:

- listening to a media, such as television, music, or videos,
- an in listening, wherein the user listens at least one person at home, or
- an out listening, wherein the user listens at least one person outside, e.g. when the user goes to a talk, a presentation, theatre, cinema, etc.

The isolation activity can be for example:

- a quiet activity, e.g. an absence of interaction, or
- an activity wherein the hearing aid device is not worn.

More specifically, as shown in FIG. 3, the interaction activity UIA can e.g. be

- participating in a conversation with one or two other persons,
- participating in a social setting with more than three persons,
- participation in a work meeting,
- listening to speech, from either a presenter, radio, tv or podcast,
- being in an environment wherein there is understandable speech nearby that you don't want to follow,
- listening to music,
- watching a show on television, in a theatre, etc.,
- having a meal either at home, a restaurant, lunch at work, etc., or
- not interacting with other person or focusing on work on your own.

The travelling activity type can be e.g. a non-travelling activity (e.g., sitting or standing still), a walking activity or a running activity, an activity implying that the user uses means of transport, etc.
As shown in FIG. 4, the user travelling activity type UTA can e.g. one of the following activity types:

- a non-travelling activity (e.g. sitting or standing still),
- a walking activity of more than a defined number of steps, as twenty steps,
- a running activity,
- a biking activity,
- a car activity, implying that the user is in a car,
- a bus activity, implying that the user is in a bus,
- a train activity, implying that the user is in a train,
- a plane activity, implying that the user flying by plane,
- etc.

The user sound environment type can be e.g. an outdoor sound environment, an indoor sound environment (such as a home like sound environment), loud sound environment (wherein the sound pressure level is above a sound pressure level threshold), quiet sound environment (wherein the sound pressure level is under the sound pressure level threshold), etc.
As shown in FIG. 5, the user sound environment USE type can be e.g. one of the following sound environment type:

- an office sound environment, which can be for example in either small closed or larger open space office plans,
- a meeting room sound environment, the meeting room being for example no bigger than for a defined number of persons, e.g. twenty persons,
- a lecture room sound environment or a presentation sound environment e.g. in a large meeting room,
- a home like sound environment, wherein activities as e.g. domestic chores, hanging out with friends or relatives, watching television, may be performed,
- a kitchen sound environment, wherein activities as cooking, doing dishes, emptying dishwasher or similar may be performed,
- a small hard room sound environment that may comprises bathroom sounds like running water, toilet flushing brushing teeth, etc.,
- an indoor public space sound environment with many people, such as a train station, a supermarket, a mall, or an airport,
- an eating sound environment, such as a restaurant, a café or a canteen, with conversation, babble noise and cutlery noise,
- a party sound environment, which comprises loud and social noise,
- a nature outdoor with people around sound environment, such as a park, a beach, an outdoor sports event,
- a nature outdoor environment without too many people sound environment, e.g. beach and when practicing hiking, kayaking, and running,
- a city outdoor sound environment which may comprise traffic noise around,
- a loud machine noise sound environment, e.g. power drill, lawnmower, blender noise environment,
- a travelling noise sound environment, e.g. sound environment when travelling or commuting in car, bus, train, bike or plane,
- a quiet sound environment, wherein the sound pressure level is typically below 40 db.

The user conversation partner indicator can indicate the type of conversation partner, for example if he is family, a

friend, or a caregiver. The user conversation partner indicator can comprise the identity of each or at least one conversation partner.

At each iteration of step 212, the neural network can output one or a plurality of user interaction activity indicator, and eventually one or a plurality of user sound environment indicator, one or a plurality of user travelling activity indicator, and/or one or a plurality of user conversation partner indicator.

The neural network module can comprise a plurality of trained neural networks. **In** this case, the neural network module can be stored partially in the memory of the external device ED partially in the memory of the server SV (at least one trained neural network being stored in the memory of the external device ED and at least one trained neural network being stored in the memory of the server SV).

For example, to determine the user conversation partner indicator, data obtained by the microphones of the hearing aid device HA and/or the external device ED are inputted into a neural network trained to detect the identity of one or more speakers.

The obtained user conversation partner indicator therefore comprises the identity of one or more speakers, and can be used to obtain the user interaction activity indicator, e.g. to determine the number of persons involved in the user interaction activity.

Such a neural network is typically trained according to a supervised training, the training data being speech data which are typically labeled. User input can be required to provide training data and/or to provide the labels of the training data.

As an alternative or as a complement, the labels of the training data can be determined using data from the external device ED and/or from the server SV. Specifically, the labeled training data can be segment of speech labeled with an identifier of the user (such as the name of the user).

For example, as shown in FIG. 7, which shows a method for determining training data, the phone contact repertory of the external device ED can be imported and/or the voicemail of the external device ED can be monitored (step S700). The voice mail inbox can be downloaded and the speech information linked to a known contact and/or the user can be extracted.

Speech can also be extracted from a live call using the external device ED. Random segments of speech can be extracted from a received call that is associated with a known contact. The microphone input of the external device ED can also be monitored.

The obtained segment speech can then be analyzed to determine whether it comes from an already known speaker (step S710), and to determine or confirm the label of the obtained segment of speech. A recognition protocol may be used to determine this, and it is also possible to ask a confirmation from the user. If the speaker is not known, the user can define a new contact associated with the obtained segment of speech (step S720), and therefore determine the label of the obtained segment of speech.

Moreover, in a step S730, it can be determined whether the quality of the segment of speech is sufficient to be used as a training data. Segments of speech that do not meet a set of quality requirement, such as a Signal to Noise Ratio requirement and/or an estimated number of speakers requirement are typically rejected.

The accepted segment of speech can be encrypted in a step S740, to ensure that it is not possible to retrieve full conversations or sensitive information.

The labeled segment of speech can be stored e.g. in a cloud storage (step S750), to enable the accumulation of training material for each known contact, in order to allow the continued improvement of the training. A dictionary of speakers can be built based in these labeled segments of speech.

Returning to FIG. 2, in a step S214, the social engagement score SES is obtained based on the at least one social indicator SI obtained at step S212.

Step S214 is typically performed by the server SV. When the at least one social indicator SI is obtained at an iteration (or an implementation) of step S212 by the external device ED, the external device ED transmits the at least one social indicator SI to the server SV via the second network NW2. As an alternative, step S214 is performed by the external device ED.

Step S214 is performed periodically, for example once a day. The social engagement score SES is typically obtained based on the social indicator(s) SI obtained since the last iteration of step S214.

The social engagement score SES can be obtained by the following formula:

$$SES = \sum_{i=1}^{n} m_i \, q_i$$

wherein:

- SES is the social engagement score,

- n is a number of social indicators SI within a time period,
- $m_i$ is a duration associated with the i-th social indicator SI, and
- $q_i$ is a social score associated with the i-th social indicator SI.

The time period is typically the time period since the last iteration of step S214, n being the number of social indicators SI obtained since the last iteration of step S214.

Each social score q is typically obtained using a matrix or a table which links each social indicator SI to an associated social score q, which defines a level of social engagement.

As shown in FIG. 6, the table MX can for example comprises:

- a plurality of different user interaction activity indicators A-F, each user interaction activity indicator A-F being associated to a social score q,
- a plurality of different user travelling activity indicators G-J, each user travelling activity indicator G-J being associated to a social score q,
- a plurality of different user sound environment indicators K-N, each user sound environment indicator K-N being associated to a social score q, and
- a plurality of different user conversation partner indicators O-Q, each user conversation partner indicator O-Q being associated to a social score q.

In the table MX of FIG. 6, the social indicators SI related to the greater social engagements are associated to the higher social scores q.

In an example, during one implementation of step S212, the social indicator A (call using a media) associated with a duration of 20 minutes is determined, as well as the social indicator B (small group conversation) associated with a duration of 60 minutes, the social indicator I (car activity) with a duration of 20 minutes and the social indicator N (Indoor public space sound environment) with a duration of 60 minutes. Using the table MX of FIG. 6, the value of the social engagement score SES determined at step S214, based on these social indicators, is 60 (0.25*20+0,5*60+0,5*20+0,25*60).

As an alternative, only the user interaction activity indicator(s) obtained since the last iteration of step S214 can be used to obtain the social engagement score SES.

In an optional step S216, the social engagement score SES obtained at step S214 can be normalized, typically according to the following formula:

$$SES_{norm} = \frac{SES * UTS}{UT}$$

wherein:

- $SES_{norm}$ is the normalized social engagement score,
- SES is the social engagement score,
- UT is an actual usage time of the hearing aid device, and
- UTS is a usage time score.

The actual usage time UT is the amount of time during which the user actually wears the hearing aid device in a day.

The usage time score UTS can be obtained according to the following formula:

$$UTS = \begin{cases} 1 - \frac{|UT - RUT|}{RUT} & , if\ UT < RUT \\ 1, & if\ UT \geq RUT \end{cases}$$

wherein:

- RUT is a recommended hearing aid device usage time, and
- UT is the actual usage time.

The recommended hearing aid device usage time RUT is the amount of hours during which the user is supposed to wear the hearing aid device HA in a day. The recommended hearing aid device usage time RUT takes into account that

hearing aid devices are not designed to be worn all the time and are often removed during times of rest or sleep or during certain activities like swimming.

The value of the usage time score UTS is comprised between 0 and 1, 0 being the value obtained when the actual usage time UT is equal to 0 (the hearing aid device has not been worn during the day) and 1 being the value obtained when the actual usage time UT is equal to 1 (the hearing aid device has been worn, during the day, during an amount of time greater or equal to the recommended hearing aid device usage time RUT).

Step S216 is typically performed by the server SV. As an alternative, step S216 is performed by the external device ED.

**In** a step S280, an alert signal AS is emitted when the social engagement score SES indicates that the user U is socially isolated.

The alert signal AS can be emitted e.g. when the social engagement score SES indicates an absence of social interaction or that the hearing aid device HA has not been worn. **In** this case, the value of the social engagement score SES is typically 0.

This e.g. allows to send a warning to caregivers so that they can try to identify the cause of such a low social engagement score SES (e.g. are the hearing aids not working or broken, are they lost, or is the user not wearing them due to loneliness) and address the problem.

To determine whether the social engagement score SES indicates that the user U is socially isolated, the social engagement score SES or the normalized social engagement score $SES_{norrn}$ can be compared to a social engagement score threshold $SES_{th}$ (step S220).

The comparison (step S220) is typically performed by the server SV. As an alternative, the comparison (step S220) is performed by the external device ED.

The comparison is typically performed after an iteration of step S214 (and eventually step S216).

The alert signal AS is emitted (step S280) when the first comparison defines a degradation of the social engagement.

Typically, the first comparison defines a degradation of the social engagement when the social engagement score SES or the normalized social engagement score $SES_{norm}$ is lower than the social engagement score threshold $SES_{th}$. This is for example the case when in the table, the more engaging the social activity is, the higher the social score is (as in the table of FIG. 6).

When in the table the more engaging the social activity is, the lower the social score is, the first comparison can define a degradation of the social engagement when the social engagement score SES or the normalized social engagement score $SES_{norm}$ is higher than the social engagement score threshold $SES_{th}$.

The social engagement score threshold $SES_{th}$ can be a previously obtained social engagement score SES or a previously obtained normalized social engagement score $SES_{norm}$.

For example, the social engagement score threshold $SES_{th}$ can be obtained during an initialization step, wherein an initial social engagement score SES is determined (or an initial first normalized social engagement score $SES1_{norm}$). The initialization step is typically performed when it is decided to monitor social isolation of the user, e.g. when the user acquires the hearing aid device HA.

The social indicators relevant for the user can be determined during this initialization step, based on its social habits at this time.

The social engagement score threshold $SES_{th}$ can also be obtained during a previous implementation of the step S210 of obtaining a social engagement score, e.g the last earlier implementation.

As an alternative or a complement, the comparison at step S220 can comprise the determination of a gradient $\frac{S\hat{E}S1-SES_{th}}{T_{SES1}-T_{SES_{th}}}$, wherein $T_{SES1}$ is the time at which SES1 has been determined and $T_{SES_{th}}$ is the time at which $SES_{th}$ has been determined.

The alert signal AS is typically a message, such as text message (for example an email or a SMS) or a voice message. Each recipient of the message can be set in advance, for example during the initialization step, and can be a close relation of the user, such as e.g. a person from the family of the user or a friend of the user, and/or a caregiver.

The recipient is typically identified by a phone number or an email address, so that he can have access to the received message via an electronic device such as a smartphone or a computer. The recipient of the message can be determined based on a number of defined degradations of the social engagement.

For example, a plurality of predefined values of a counter can be associated with different recipients, e.g. a first value can be associated with a person from the family and a second value can be associated to a caregiver.

Each time a degradation of the social engagement is detected at an implementation of step S220, the counter can be incremented, and when an improvement is detected, the counter can be set to zero. Before step S280, to determine the recipient of the message, the current value of the counter is compared to the plurality of predefined values. Typically, when the current value of the counter is greater than one of the predefined values, the recipient associated with this predefined value is selected as a recipient of the message.

Furthermore, data elements HAD, EDD obtained by the hearing aid device HA or the external device ED can also be used for other purposes, such as enhancing focus of the hearing aid device HA on a speaker and/or to reduce noise.

For example, data obtained by the accelerometer and the microphones of the hearing aid device HA can be used to get information about what sound the user would like to focus on. The obtained data are then analyzed and at least one processing parameter of the hearing aid device can be modified according to the result of the analysis.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method is not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

## Claims

**1.** A method for monitoring social isolation of a user, the method comprising the following steps:

- obtaining, via a hearing aid device, at least one data element about the user or the user environment,
- obtaining a social engagement score based on the at least one data element, the social engagement score indicating how much the user is socially engaged,
- emitting an alert signal when the social engagement score indicates that the user is socially isolated.

**2.** The method according to claim 1, wherein the at least one data element is a sound signal obtained by a microphone of the hearing aid device.

**3.** The method according to claim 1 or 2, wherein the step of obtaining the social engagement score comprises the following steps:

- inputting the at least one data element into a neural network module, so that the neural network outputs at least one social indicator,
- obtaining the social engagement score based on the at least one social indicator.

**4.** The method according to claim 3, further comprising the following step:

- obtaining, via an external device, at least one another data element about the user or the user environment,

the at least one another data element obtained by the external device and the at least one data element obtained by the hearing aid device being inputted to the trained neural network so that the neural network outputs the at least one social indicator.

**5.** The method according to claim 3 or 4, wherein the at least one social indicator comprises:

- a user interaction activity indicator, describing the type of interaction activity of the user,
- a user sound environment indicator, describing the type of sound environment around the user,
- a user travelling activity indicator, describing the type of travelling activity of the user, and/or
- a user conversation partner indicator, describing the presence of at least one conversation partner of the user.

**6.** The method according to claim 3 to 5, wherein the social engagement score is obtained according to the following formula:

$$SES = \sum_{i=1}^{n} m_i \, q_i$$

wherein:

- SES is the social engagement score,
- n is a number of social indicators within a time period,
- $m_i$ is a duration associated with the i-th social indicator, and
- $q_i$ is a social score associated with the i-th social indicator.

**7.** The method according to claim 6, wherein the time period is a day.

**8.** The method according to claims 6 or 7, wherein the social engagement score is obtained by using a matrix which links each social indicator to an associated social score which defines a level of social engagement.

**9.** The method according to any one of claims 6 to 8, wherein the social engagement score is normalized according to the following formula:

$$SES_{norm} = \frac{SES * UTS}{UT}$$

wherein:

- $SES_{norm}$ is the normalized social engagement score,
- SES is the social engagement score,
- UT is a hearing aid device usage time, and
- UTS is a usage time score, obtained according to the following formula:

$$UTS = \begin{cases} 1 - \dfrac{|UT - RUT|}{RUT} & , if\ UT < RUT \\ 1, & if\ UT \geq RUT \end{cases}$$

wherein:

- RUT is a recommended hearing aid device usage time, and
- UT is an actual usage time.

**10.** The method according to any one of claims 1 to 9, further comprising the following step:

- comparing the social engagement score or the normalized social engagement score to a social engagement score threshold,

the alert signal being sent when the comparison defines a degradation of the social engagement.

**11.** The method according to any one of claims 1 to 10, wherein the alert is a message sent to a close relation of the user and/or a caregiver.

**12.** A system for monitoring social isolation of a user, the system comprising a hearing aid device,

the hearing aid device configured to obtain at least one data element about the user or the user environment, the system being configured to:

- obtain a social engagement score based on the at least one data element, the social engagement score indicating how much the user is socially engaged,
- emit an alert when the social engagement score indicates that the user is socially isolated.

**13.** A data processing system comprising a processor and program code means for causing the processor to perform at least some of the steps of the method of any one of claims 1 to 11.

**14.** A computer program product comprising instructions which, when the program is executed by a computer, cause the computer to carry out the steps of the method of any one of claims 1 to 11.

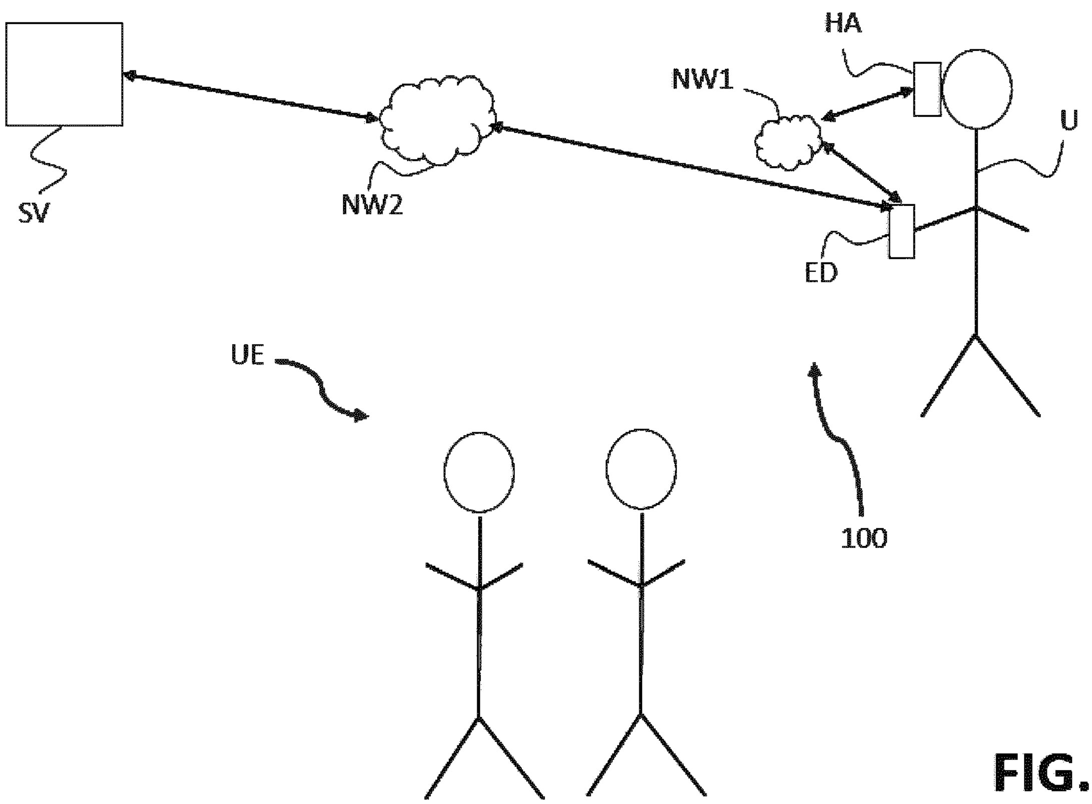
HA
NW1
U
SV
NW2
ED
UE
100

FIG. 1

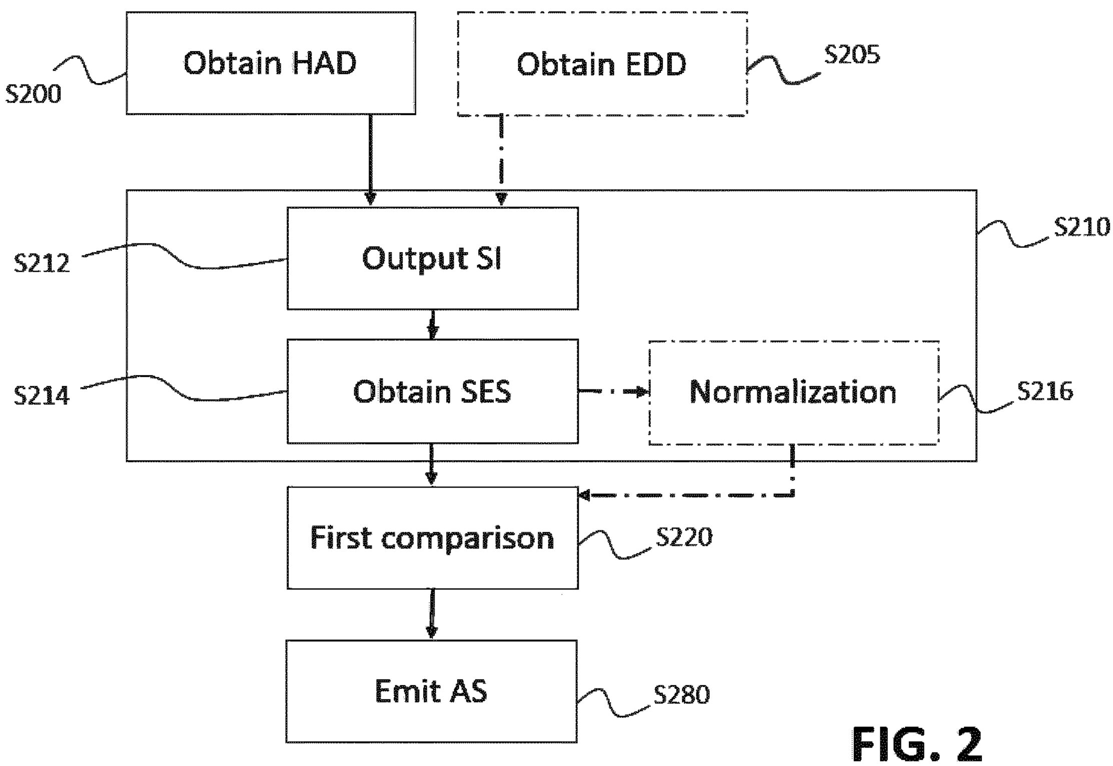
Obtain HAD
Obtain EDD
S200
S205
S210
Output SI
S212
Obtain SES
S214
Normalization
S216
First comparison
S220
Emit AS
S280

FIG. 2

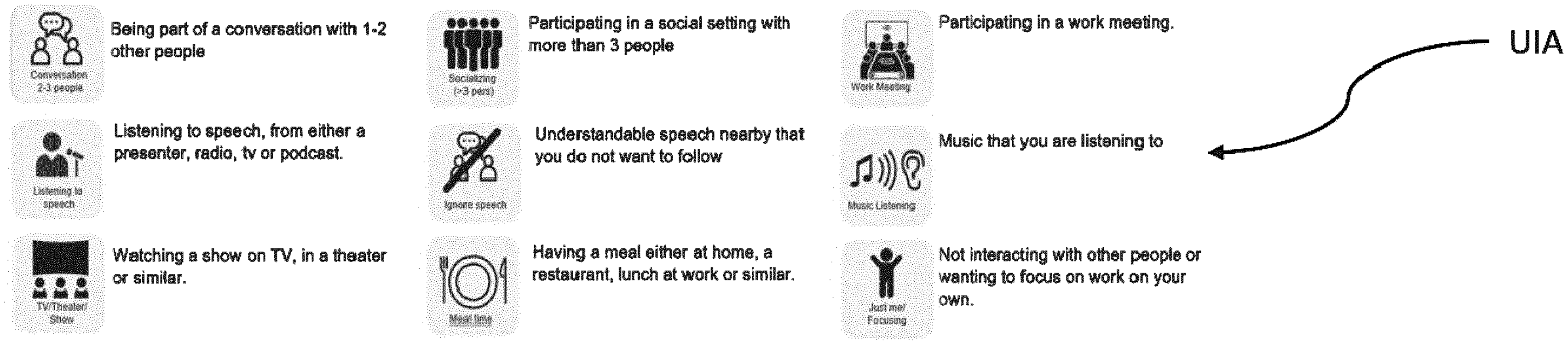
Conversation 2-3 people
Being part of a conversation with 1-2 other people
Socializing (>3 pers)
Participating in a social setting with more than 3 people
Work Meeting
Participating in a work meeting.
UIA
Listening to speech
Listening to speech, from either a presenter, radio, tv or podcast.
Ignore speech
Understandable speech nearby that you do not want to follow
Music Listening
Music that you are listening to
TV/Theater/ Show
Watching a show on TV, in a theater or similar.
Meal time
Having a meal either at home, a restaurant, lunch at work or similar.
Just me/ Focusing
Not interacting with other people or wanting to focus on work on your own.

FIG. 3

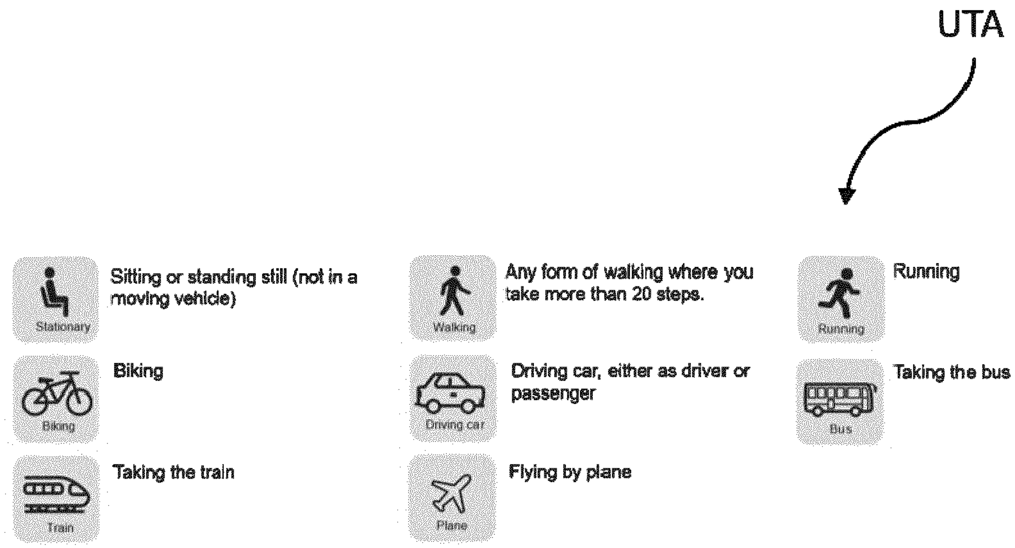
UTA
Stationary
Sitting or standing still (not in a moving vehicle)
Walking
Any form of walking where you take more than 20 steps.
Running
Running
Biking
Biking
Driving car
Driving car, either as driver or passenger
Bus
Taking the bus
Train
Taking the train
Plane
Flying by plane

FIG. 4

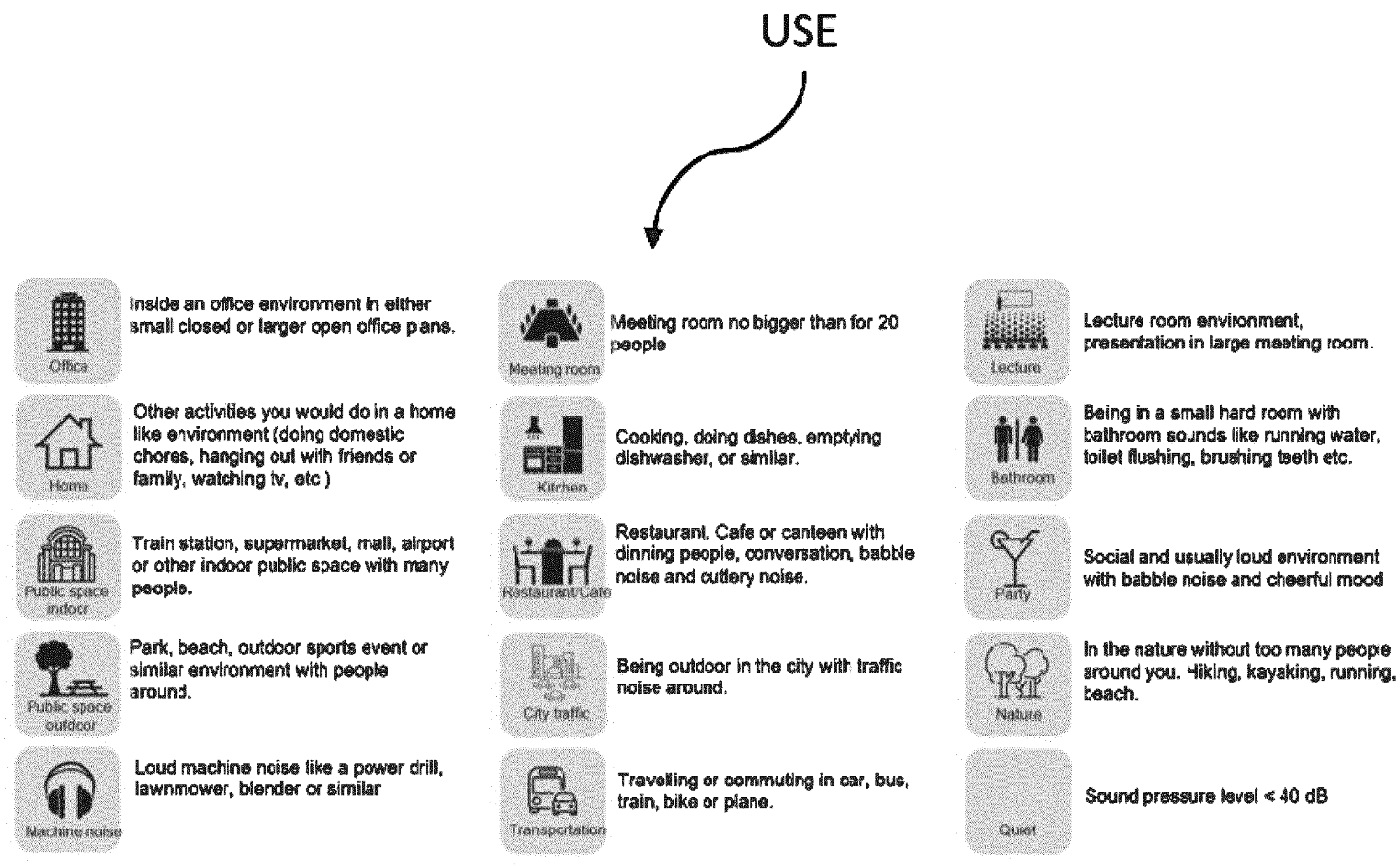
USE
Office
Inside an office environment in either small closed or larger open office pans.
Home
Other activities you would do in a home like environment (doing domestic chores, hanging out with friends or family, watching tv, etc )
Public space indoor
Train station, supermarket, mall, airport or other indoor public space with many people.
Public space outdoor
Park, beach, outdoor sports event or similar environment with people around.
Machine noise
Loud machine noise like a power drill, lawnmower, blender or similar
Meeting room
Meeting room no bigger than for 20 people
Kitchen
Cooking, doing dishes, emptying dishwasher, or similar.
Restaurant/Cafe
Restaurant, Cafe or canteen with dinning people, conversation, babble noise and cutlery noise.
City traffic
Being outdoor in the city with traffic noise around.
Transportation
Travelling or commuting in car, bus, train, bike or plane.
Lecture
Lecture room environment, presentation in large meeting room.
Bathroom
Being in a small hard room with bathroom sounds like running water, toilet flushing, brushing teeth etc.
Party
Social and usually loud environment with babble noise and cheerful mood
Nature
In the nature without too many people around you. Hiking, kayaking, running, beach.
Quiet
Sound pressure level < 40 dB

FIG. 5

MX

| Description | | | Social indicator | Quality score |
|---|---|---|---|---|
| User interation activity | Active listenig activity | Call using a media | A | 0.25 |
| | | Small group conversation | B | 0.5 |
| | | Large group conversation | C | 0.7 |
| | Passive listening | Listening to media | D | 0.1 |
| | | In listening | E | 0.2 |
| | | Out listening | F | 0.4 |
| User traveling activity | | Non-travelling activity | G | 0 |
| | | Walking activity | H | 0.1 |
| | | Car activity | I | 0.5 |
| | | Train activity | J | 0.5 |
| User sound environment | | Office sound environment | K | 0.5 |
| | | Home like sound environment | L | 0 |
| | | Eating sound environment | M | 0.5 |
| | | Indoor public space sound environment | N | 0.25 |
| User conversation partner indicator | | Family | O | 0.5 |
| | | Friend | P | 0.5 |
| | | Caregivers | Q | 0.25 |

SI

q

FIG. 6

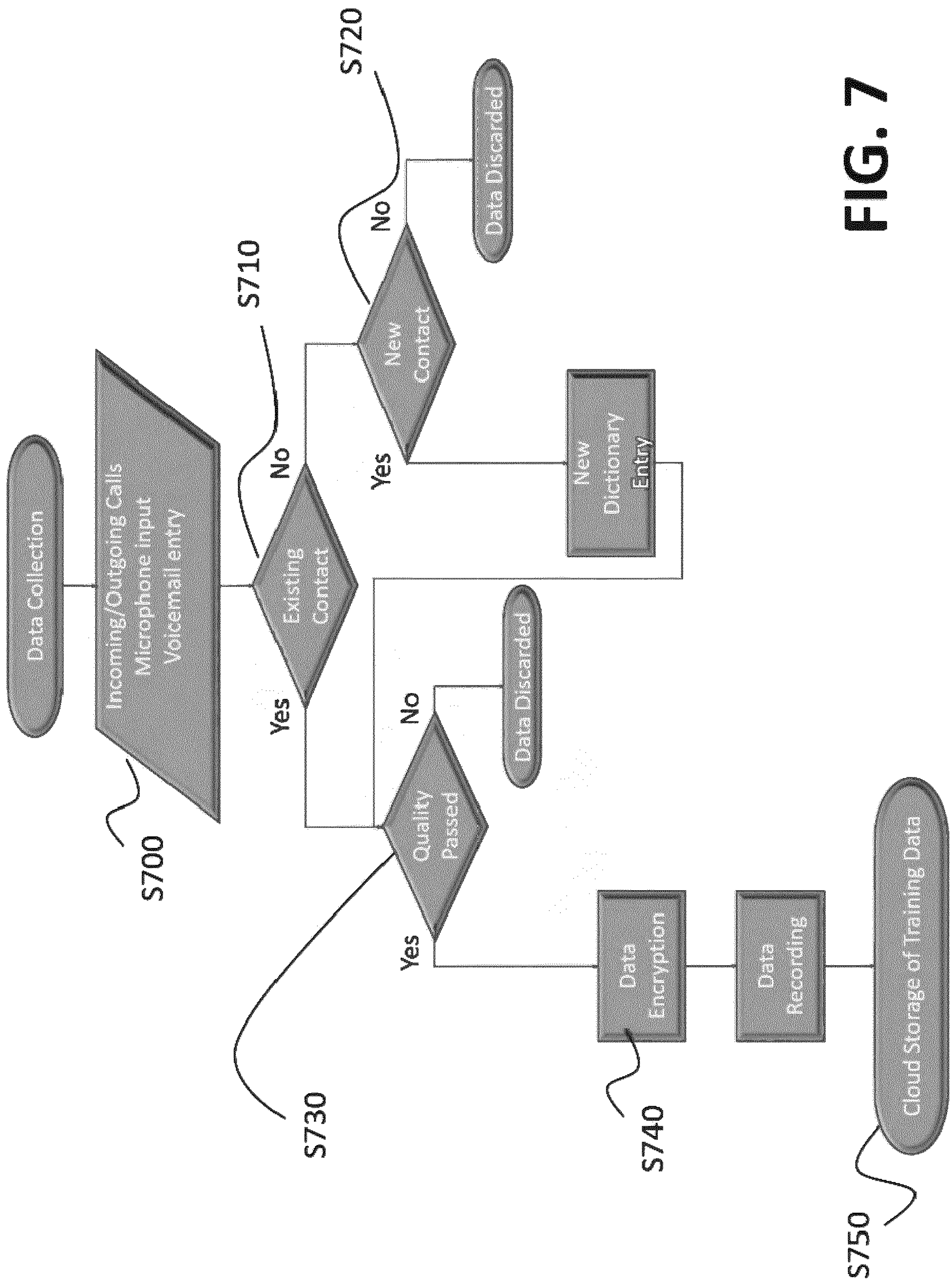
Data Collection
Incoming/Outgoing Calls
Microphone input
Voicemail entry
S700
Existing Contact
S710
No
Yes
New Contact
S720
No
Yes
Data Discarded
New Dictionary Entry
Quality Passed
No
Yes
Data Discarded
S730
Data Encryption
S740
Data Recording
Cloud Storage of Training Data
S750

FIG. 7

Europäisches Patentamt
European Patent Office
Office européen des brevets

# EUROPEAN SEARCH REPORT

Application Number
EP 25 17 8234

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2020/245869 A1 (SIVAN MATAN [IL] ET AL) 6 August 2020 (2020-08-06)<br>* abstract *<br>* paragraph [0004] - paragraph [0013] *<br>* paragraph [0032] - paragraph [0270] *<br>* figures 1-18 *<br>----- | 1-5, 11-14<br>6-10 | INV.<br>H04W4/38<br>G06Q50/22 |
| Y | EP 3 930 346 A1 (OTICON AS [DK]) 29 December 2021 (2021-12-29)<br>* abstract *<br>* paragraph [0001] - paragraph [0070] *<br>* paragraph [0076] - paragraph [0120] *<br>* figures 1-8 *<br>----- | 6-10 | |
| A | BHOWMIK ACHINTYA K ET AL: "Hear, Now, and in the Future: Transforming Hearing Aids Into Multipurpose Devices", IEEE COMPUTER SOCIETY, IEEE, USA, vol. 54, no. 11, 25 October 2021 (2021-10-25), pages 108-120, XP011884525, ISSN: 0018-9162, DOI: 10.1109/MC.2021.3105151 [retrieved on 2021-10-22]<br>* abstract *<br>* section: MONITORING HEALTH AND WELLNESS: TRACKING ACTIVITY AND ENGAGEMENT *<br>* figure 9 *<br>----- | 1-14 | |

| TECHNICAL FIELDS SEARCHED (IPC) |
|---|
| H04W |
| G06Q |
| H04S |
| H04R |

The present search report has been drawn up for all claims

1

| Place of search | Date of completion of the search | Examiner |
|---|---|---|
| Munich | 15 October 2025 | Körbler, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 17 8234

This annex lists the patent family members relating to the patent documents cited in the above-mentioned European search report. The members are as contained in the European Patent Office EDP file on
The European Patent Office is in no way liable for these particulars which are merely given for the purpose of information.

15-10-2025

| Patent document cited in search report | Publication date | Patent family member(s) | Publication date |
|---|---|---|---|
| US 2020245869 A1 | 06-08-2020 | EP 3918535 A1 | 08-12-2021 |
| | | EP 3918816 A1 | 08-12-2021 |
| | | US 2020245869 A1 | 06-08-2020 |
| | | US 2020245938 A1 | 06-08-2020 |
| | | US 2022313162 A1 | 06-10-2022 |
| | | US 2023225675 A1 | 20-07-2023 |
| | | US 2024415458 A1 | 19-12-2024 |
| | | WO 2020160288 A1 | 06-08-2020 |
| | | WO 2020160475 A1 | 06-08-2020 |
| EP 3930346 A1 | 29-12-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **CORNELL, E.Y.** ; **WAITE, L.J.** Measuring social isolation among older adults using multiple indicators from the NSHAP study. *Journal of Gerontology: Social Sciences*, 2009, vol. 64B (S1), 138-146
- **KAREN WINDLE** ; **JENNIFER FRANCIS** ; **CAROLINE COOMBER**. *Preventing loneliness and social isolation: interventions and outcomes*, 2011